# EUROPÄISCHE PATENTANMELDUNG

(11) **EP 2 492 397 A1**
(43) Veröffentlichungstag der Anmeldung: **29.08.2012**
(21) Anmeldenummer: 12000821.4
(22) Anmeldetag: 09.02.2012
(51) Int. Cl.: E01F 9/016, E01F 9/019, E01F 9/03, B60Q 7/00

(54) **Warnvorrichtung für den Straßenverkehr**

(30) Priorität: 23.02.2011 DE 102011012181
(71) Anmelder: Stefanovski, Rudolf, 72535 Heroldstatt (DE)
(72) Erfinder: Stefanovski, Rudolf, 72535 Heroldstatt (DE)
(74) Vertreter: Meyer, Thorsten

(57) **Zusammenfassung**

Die Erfindung betrifft eine Warnvorrichtung (1) für den Straßenverkehr mit einer ein Lichtsignal aussendenden Signaleinheit (2), wobei an dem Grundkörper (3) der Warnvorrichtung eine Aufnahme (4) vorgesehen ist, die an die Dimensionen von üblichen Leitpfosten (5) angepasst ist, so dass diese auf einen solchen Leitpfosten (5) aufgesetzt werden kann und diesen teilweise umschließen kann.

## Beschreibung

Die Erfindung betrifft eine Warnvorrichtung für den Straßenverkehr mit einer ein Lichtsignal aussendenden Signaleinheit.

Im Straßenverkehr besteht bei der Absicherung von Pannen-oder Unfallstellen oftmals das Problem, dass die aufgestellten Warnvorrichtungen die üblicherweise in Kraftfahrzeugen vorgesehen sind nicht ausreichen um sicher nachfolgenden Verkehr auf die Situation sicher hinzuweisen.

So besteht bei liegengebliebenen Lastwagen oftmals das Problem, dass wenn bekannte selbstständig stehende aufstellbare Warndreiecke verwendet werden, diese einfach durch den entstehenden Fahrtwind vorbeifahrender Lastwagen umgeweht werden. Auch ist bei widrigen Wetterverhältnissen, etwa bei starkem Schneefall, die Standhöhe der handelsüblichen Warndreiecke oder Blinklichter einfach zu niedrig. So kann eine aufgestellte Warnvorrichtung einfach zugeschneit werden.

Aus der 299 19 369 U1 ist ein auf einen Straßen-Leitpfosten aufsetzbares Blinklicht bekannt, bei dem eine Aufnahme an der Unterseite der Einrichtung an die Außengestalt von Straßen-Leitpfosten angepasst ist.

Aus der DE 20 2010 013 985 U1 ist ein Warndreieck bekannt, bei dem in ebensolcher Weise ein Aufstecken des Warndreiecks auf einen Straßen-Leitpfosten durch einen entsprechend geformten Hohlkörper erfolgt.

Aus der DE 20 2005 018 609 U1 ist eine erhöhte Warneinrichtung zur Montage an einem Leitpfosten bekannt, bei der die Erhöhung über einen am Leitpfosten besfestigten Masten erfolgt.

Aufgabe der Erfindung ist es eine verbesserte Warnvorrichtung vorzuschlagen.

Diese Aufgabe wird durch eine Warnvorrichtung für den Straßenverkehr nach den Merkmalen des Anspruchs 1 gelöst.

Erfindungsgemäß ist vorgeschlagen, dass an dem Grundkörper der Warnvorrichtung eine Aufnahme vorgesehen ist, die an die Dimensionen von üblichen Leitpfosten angepasst ist, so dass diese auf einen solchen Leitpfosten aufgesetzt werden kann und diesen teilweise umschließen kann. Hierdurch wird die Sichthöhe der Signaleinrichtung deutlich erhöht und in das Blickfeld von insbesondere hoch sitzenden Berufskraftfahrern am Steuer entsprechender Kraftfahrzeuge gelenkt. Auch kann der normale Personenkraftverkehr viel sicherer früher Sichtkontakt aufnehmen, was insbesondere bei schnellen Fahrzeugen mit hoher Geschwindigkeit bisher oft erst viel zu spät möglich war. Ein entsprechendes Blinklicht ist bereits vorzeitig sichtbar. Weiterhin ist nach der Erfindung vorgesehen, dass an der Warnvorrichtung ein teleskopartig ausziehbarer Halter vorgesehen ist, an dessen Außenende ein Warndreieck halterbar ist. Hierdurch kann neben der Signaleinrichtung ein gewohntes Warndreieck die entsprechende beim Fahrer antrainierte Wirkung voll entfalten.

Dem folgend ist die Aufnahme an die abgerundete Dreiecksform des Querschnitts von üblichen Leitpfosten angepasst.

Von Vorteil ist das Warndreieck an dem teleskopartigen Halter befestigt und zusammenlegbar ausgestaltet. Hierdurch kann die gesamte Vorrichtung sehr platzsparend zusammengelegt werden und in der üblichen Art und Weise verstaut werden.

Bevorzugterweise ist die Beleuchtungseinheit einstückig mit der Warnvorrichtung ausgebildet.

Nach einer vorteilhaften Ausgestaltung der Erfindung ist oder an der Warnvorrichtung ein Batteriefach vorgesehen, das eine Batterie aufnehmen kann, die die Signaleinheit versorgen kann.

Vorteilhafterweise ist der teleskopartige Halter von der Warnvorrichtung ausziehbar, so dass dieser ca. einen halben Meter von der Warnvorrichtung absteht. Hierdurch ist sichergestellt, dass nach aufgesetzter Warnvorrichtung das Warndreieck am Teleskophalter nicht zu weit in die Straße hineinragt.

Nachfolgend wird die Erfindung anhand der Zeichnungen weiter erläutert. Im Einzelnen zeigt die schematische Darstellung in:

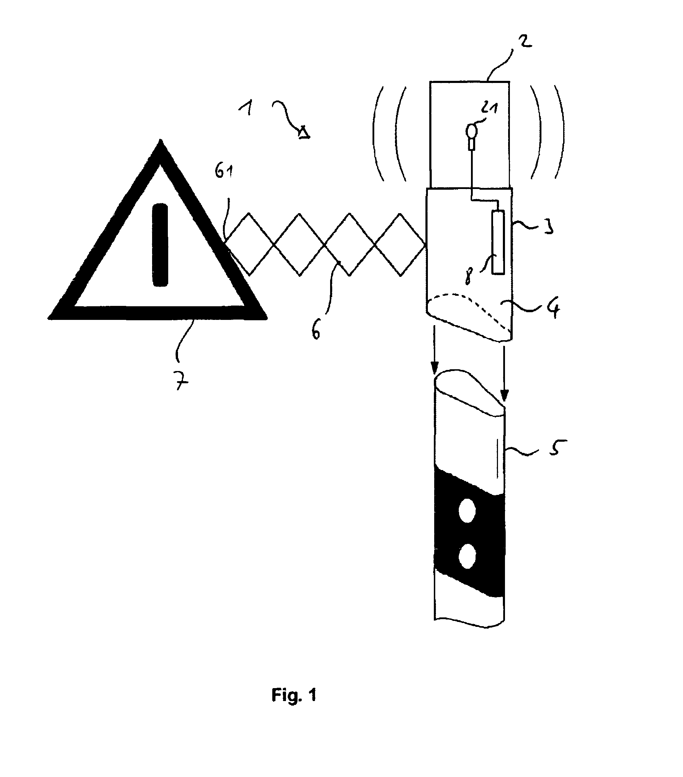

- Fig. 1: eine schematische Darstellung einer erfindungsgemäßen Warnvorrichtung für den Straßenverkehr.

Die einzige Fig. zeigt eine beispielhafte Warnvorrichtung 1 für den Straßenverkehr mit einer ein Lichtsignal aussendenden Signaleinheit 2. Das Lichtsignal ist dabei in der üblicher Art in Form eines gelben Blinklichts ausgestaltet.

An dem Grundkörper 3 der Warnvorrichtung ist im Beispiel eine angeformte an die abgerundete Dreiecksform des Querschnitts von üblichen Leitpfosten 5 angepasste Aufnahme 4 vorgesehen, dass diese auf einen solchen Leitpfosten 5 einfach aufgesetzt werden kann und diesen teilweise umschließt. So kann auch in großer Eile eine sichere und einfache Handhabung und Aufstellung erfolgen, wobei ein erhöhter und definierter Ort sichergestellt ist.

Weiterhin ist an der Warnvorrichtung 1 ein teleskopartig ausziehbarer Halter 6 angebracht, an dessen Außenende 61 ein Warndreieck 7 gehaltert ist.

Das Warndreieck 7 ist im Beispiel zusammenlegbar ausgestaltet.

Die Signaleinheit 2 mit der darin vorgesehenen Leuchtquelle 21 ist einstückig mit der Warnvorrichtung 1 ausgebildet. Zur Stromversorgung derselben ist im Beispiel in der Warnvorrichtung 1 ein Batteriefach 8 vorgesehen, das eine Batterie aufnimmt.

Im Beispiel ist der teleskopartige Halter 6 des Warndreiecks 7 ausziehbar ausgestaltet, so dass dieser ca. einen halben Meter von der Warnvorrichtung absteht.

### Bezugszeichenliste

- 1: Warnvorrichtung
- 2: Signaleinheit
- 21: Leuchtquelle
- 3: Grundkörper
- 4: Aufnahme
- 5: Leitpfosten
- 6: Halter
- 61: Außenende
- 7: Warndreieck
- 8: Batteriefach

## Patentansprüche

1. Warnvorrichtung (1) für den Straßenverkehr mit einer ein Lichtsignal aussendenden Signaleinheit (2),
wobei an dem Grundkörper (3) der Warnvorrichtung eine Aufnahme (4) vorgesehen ist, die an die Dimensionen von üblichen Leitpfosten (5) angepasst ist, so dass diese auf einen solchen Leitpfosten (5) aufgesetzt werden kann und diesen teilweise umschließen kann,
**dadurch gekennzeichnet,**
**dass** an der Warnvorrichtung (1) ein teleskopartig ausziehbarer Halter (6) vorgesehen ist, an dessen Außenende (61) ein Warndreieck (7) halterbar ist.

2. Warnvorrichtung für den Straßenverkehr nach Anspruch 1, **dadurch gekennzeichnet,**
**dass** die Aufnahme (4) an die abgerundete Dreiecksform des Querschnitts von üblichen Leitpfosten (5) angepasst ist.

3. Warnvorrichtung für den Straßenverkehr nach Anspruch 1 oder 2,
**dadurch gekennzeichnet,**
**dass** das Warndreieck (7) an dem teleskopartigen Halter (6) befestigt ist und zusammenlegbar ausgestaltet ist.

4. Warnvorrichtung für den Straßenverkehr nach einem der vorhergehenden Ansprüche,
**dadurch gekennzeichnet,**
**dass** die Signaleinheit (2) einstückig mit dem Grundkörper der Warnvorrichtung (1) ausgebildet ist.

5. Warnvorrichtung für den Straßenverkehr nach einem der vorhergehenden Ansprüche,
**dadurch gekennzeichnet,**
**dass** in oder an der Warnvorrichtung (1) ein Batteriefach (8) vorgesehen ist, das eine Batterie aufnehmen kann, die die Signaleinheit (2) versorgen kann.

6. Warnvorrichtung für den Straßenverkehr nach einem der vorhergehenden Ansprüche,
**dadurch gekennzeichnet,**
**dass** der teleskopartige Halter (6) von der Warnvorrichtung (1) ausziehbar ist, so dass dieser ca. einen halben Meter von der Warnvorrichtung absteht.
